# EUROPEAN PATENT APPLICATION

(11) **EP 2 886 937 A1**
(43) Date of publication of application: **24.06.2015**
(21) Application number: 14001139.6
(22) Date of filing: 27.03.2014
(51) Int. Cl.: F21S 8/10, G02B 5/02, G02B 19/00

(54) **Light guide apparatus**

(30) Priority: 18.12.2013 TW 102146947
(71) Applicant: T.Y.C. Brother Industrial Co., Ltd., 70248 Tainan City (TW)
(72) Inventor: LIN, Min-Feng, 70248 Tainan City (TW); SHIH, Ming-Jhia, 70248 Tainan City (TW); WU, Jin-Hua, 70248 Tainan City (TW)
(74) Representative: Zeitler Volpert Kandlbinder Patent- und Rechtsanwälte Partnerschaft mbB

(57) **Abstract**

A light guide apparatus includes a light guide member (4) and a light-collecting member (5). Light is able to pass through a light-entering surface (51) of the light-collecting member (5), a light-exiting surface (52) of the light-collecting member (5) and a light guide entry surface (43) of the light guide member (4) to enter the light guide member (4), and two first light guide surfaces (41) and two second light guide surfaces (42) of the light guide member (4) are able to reflect the light toward a light guide exit surface (44) of the light guide member (4) to make the light exit the light guide member (4).

## Description

The invention relates to a light guide apparatus, and more particularly to a light guide apparatus suitable for guiding and distributing light from a point light source to in effect form an area light source.

In recent years, a light emitting diode (LED) serving as a light source is popularly used in a vehicular light. Light emitted from the LED is primarily guided by a light guide lens to direct outward. A structural design of the light guide lens determines distribution of a light pattern. Referring to Figure 1, U.S. Patent No. US 7,270,454 discloses a conventional vehicular lamp that includes a light emitting member 11 and a bowl-shaped lens 12. The lens 12 includes a direct light control unit 121, and a reflected light control unit 122 surrounding the direct light control unit 121. The reflected light control unit 122 has an uneven front surface 123 and an uneven rear surface 124 opposite to the uneven front surface 123. As a result, the light emitted from the light emitting member 11 toward the direct light control unit 121 tends to directly pass through the direct light control unit 121 and exit therefrom. The light emitted from the light emitting member 11 toward the reflected light control unit 122 tends to be directly reflected by the rear surface 124 toward the uneven front surface 123, such that the light exits the front surface 123 to generate an annular light pattern with alternately annular bright and dark regions.

Since the lens 12 is bowl-shaped and formed with a plurality of spaced-apart annular protrusions, the lens 12 assists in converting a point light source as is the light emitting element 11 into an area light source and producing a light pattern. However, some modern vehicular lamps require not only a main light with a wide area light distribution, but also an auxiliary light for outlining the profile of the vehicular lamp. Therefore, there is a need in the art to improve the structure of the light guide lens to be able to be installed in the limited inner space of the vehicular lamp and to accentuate the profile of the vehicular lamp.

Aside from vehicular lamps, other illumination devices, such as lighting devices, signal light devices, decorative lighting devices, advertising light boxes, etc. , used either indoor or outdoor also require a light guide lens to complement a light emitting device for emphasizing the profile of the illumination device. In order to meet the diverse needs of customers, a light guide lens with an innovative structure with a distinct light guide function is provided.

Therefore, an object of the present invention is to provide a light guide apparatus that is able to be easily installed in a vehicular lamp and that is able to emphasize a profile of the vehicular lamp.

According to the present invention, a light guide apparatus includes a light guide unit that includes a light guide member and a light-collecting member.

The light guide member has a light guide exit surface, a light guide entry surface that is opposite to the light guide exit surface, two opposite first light guide surfaces that are connected between the light guide exit surface and the light guide entry surface, and two opposite second light guide surfaces each of which is connected between the light guide exit surface and the light guide entry surface and between the first light guide surfaces. The second light guide surfaces are transverse to the first light guide surfaces.

The light-collecting member is disposed in proximity to the light guide entry surface, and has a light-exiting surface that faces the light guide entry surface and a light-entering surface that is opposite to the light-exiting surface.

Preferably, light is able to pass through the light-entering surface, the light-exiting surface and the light guide entry surface to enter the light guide member, and the first light guide surfaces and the second light guide surfaces are able to reflect the light toward the light guide exit surface to make the light exit and travel away from the light guide member.

Other features and advantages of the present invention will become apparent in the following detailed description of the preferred embodiment with reference to the accompanying drawings, of which:

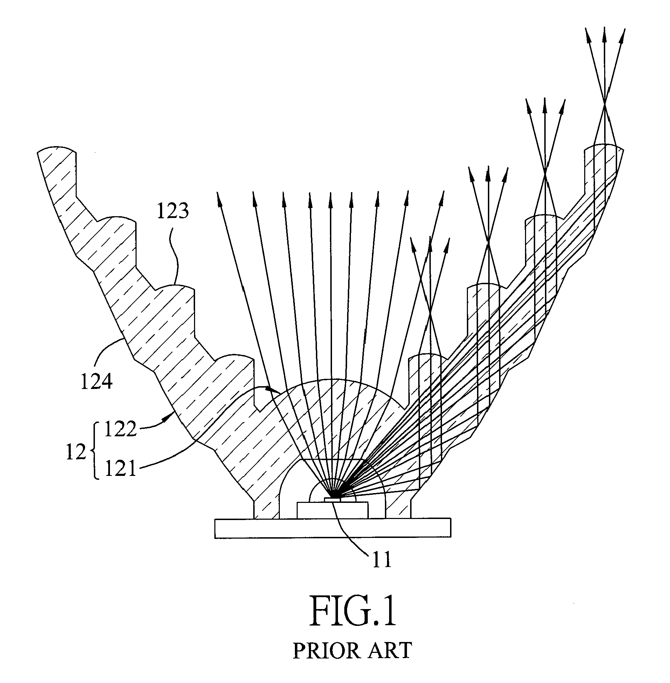

Figure 1 is a schematic sectional view of a conventional vehicular lamp;
Figure 2 a perspective view of the preferred embodiment of a light guide apparatus according to the present invention;
Figure 3 is a fragmentary sectional view of the preferred embodiment in use with a light guide member, a light-collecting member and a light emitting member;
Figure 4 is a schematic diagram similar to Figure 3 for illustrating light paths of light emitted from the light emitting member and traveling into and through the preferred embodiment; and
Figure 5 is a front schematic view of a light pattern distribution formed by the preferred embodiment.

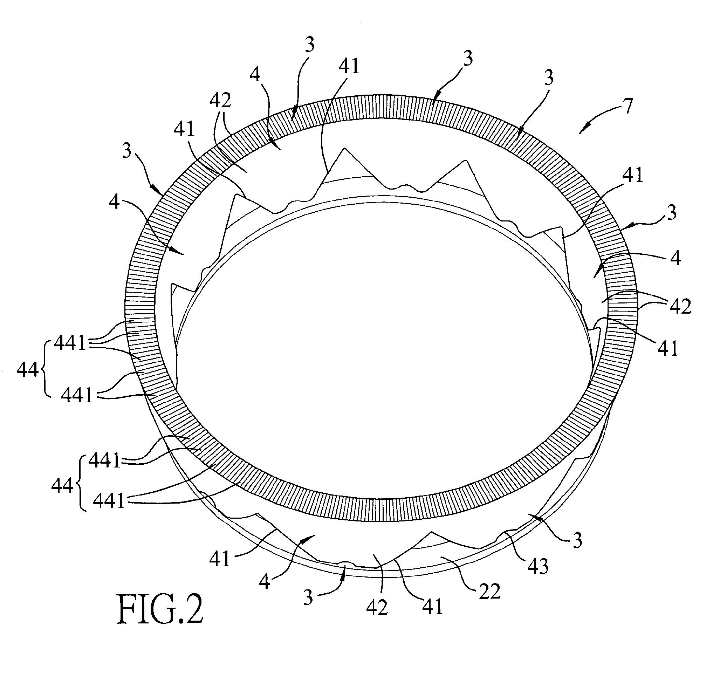

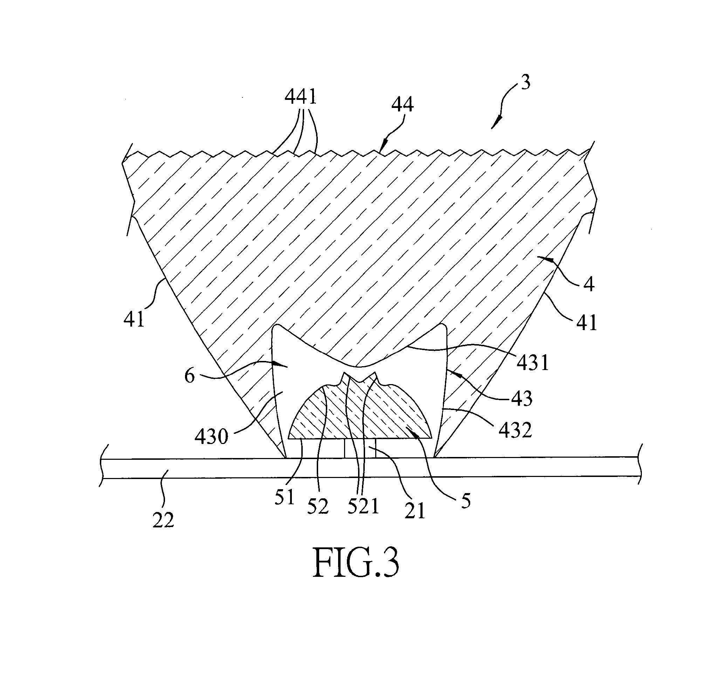

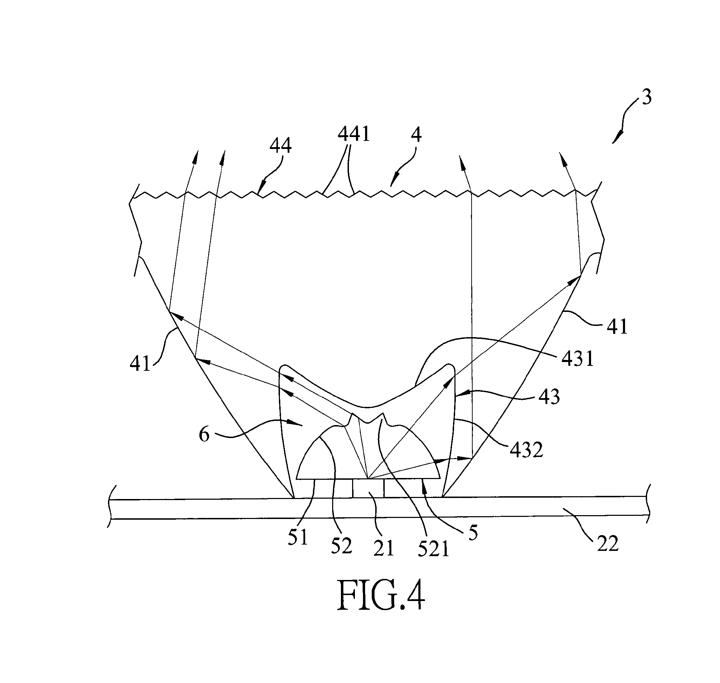

Referring to Figures 2 to 4, the preferred embodiment of a light guide apparatus according to the present invention is shown to be suitable for guiding light emitted from a plurality of light emitting members 21 (only one is shown in Figures 3 and 4) each of which may be configured as a light emitting diode (LED). The light emitting members 21 are mounted on an annular circuit board 22. In this preferred embodiment, the light guide apparatus is substantially configured in an annular manner and includes a plurality of light guide units 3.

In this preferred embodiment, each of the light guide units 3 includes a light guide member 4 and a light-collecting member 5. The light guide member 4 has a one-piece configuration and is made of a plastic material. Preferably, the light guide members 4 of the light guide units 3 are arranged in an annular manner and are connected to each other to form an annular member 7. Preferably, in order to form the annular member 7, the light guide member 4 of each of the light guide units 3 is circumferentially curved.

In this preferred embodiment, the light guide member 4 of each of the light guide units 3 has a light guide exit surface 44, a light guide entry surface 43 that is opposite to the light exit surface 44, two opposite first light guide surfaces 41 that are connected between the light guide exit surface 44 and the light guide entry surface 43, and two opposite second light guide surfaces 42 each of which is connected between the light guide exit surface 44 and the light guide entry surface 43 and between the first light guide surfaces 41. The second light guide surfaces 42 are transverse to the first light guide surfaces 41.

The light guide exit surface 44 is a roughened surface formed with a plurality of prism protrusions 441 for light diffusion. Each of the prism protrusions 441 extends in a transverse direction from one of the second light guide surfaces 42 to the other of the second light guide surfaces 42. In this preferred embodiment, the light guide exit surfaces 44 of the light guide members 4 are connected to each other in the annular manner and cooperatively form an annular surface. The light guide entry surface 43 is indented into the light guide member 4 and toward the light guide exit surface 44 and confines a mounting space 430. It should be noted that the roughened light guide exit surface 44 of the light guide member 4 is not limited to have the prism protrusions 441 and may have any appropriate structure selected by a skilled artisan based on the actual practice.

In this preferred embodiment, the first light guide surfaces 41 of each of the light guide members 4 are curved and are opposite to each other along a circumferential direction of the annular member 7, and the second light guide surfaces 42 of each of the light guide members 4 are opposite to each other along a radial direction of the annular member 7. Preferably, the first light guide surfaces 41 of each of the light guidemembers 4 extend toward the light guide exit surface 44 in a divergent manner.

For each light guide unit 3, the light-collecting member 5 is disposed in proximity to the light guide entry surface 43 and has a light-exiting surface 52 that faces the light guide entry surface 43, and a light-entering surface 51 that is opposite to the light-exiting surface 52. The light emitted from a corresponding one of the light emitting members 21 is able to pass through the light-entering surface 51, the light-exiting surface 52 and the light guide entry surface 43 to enter the light guide member 4, and the first light guide surfaces 41 and the second light guide surfaces 42 are able to reflect the light toward the light guide exit surface 44 to make the light exit and travel away from the light guide member 4.

In this preferred embodiment, the light-collecting member 5 is disposed in the mounting space 430. Preferably, for each of the light guide units 3, the light guide entry surface 43 of the light guide member 4 has a first light entry portion 431 that faces toward the light-exiting surface 52 of the light-collecting member 5, and a second light entry portion 432 that surrounds the light-collecting member 5 and is connected to a periphery of the first light entry portion 431. The first light entry portion 431 and the second light entry portion 432 cooperatively defining the mounting space 430. The first light entry portion 431 is convex toward the light-exiting surface 52 of the light-collecting member 5. In addition, the light-exiting surface 52 of the light-collecting member 5 is configured as a curved surface and has a plurality of microstructures 521 for diffusing light. The light-entering surface 51 is configured as a plane surface relative to the light-exiting surface 52. In this preferred embodiment, between the light guide member 4 and the light-collecting member 5, the light guide member 4 and the light-collecting member 5 cooperatively define an air region 6 in the mounting space 430. It should be noted that the light-exiting surface 52 of the light-collecting member 5 is not limited to having the microstructures 521.

In use of the light guide apparatus, each of the light emitting members 21 is disposed in proximity to the light-entering surface 51 of the light-collecting member 5 of a corresponding one of the light guide units 3. For each of the light guide units 3, when the light emitted from the corresponding light emitting member 21 passes the light-entering surface 51 of the light-collecting member 5 and enters the light-collecting member 5, the light-collecting member 5 collects the light, and then the light is transmitted from the light-exiting surface 52 of the light-collecting member 5 to the light guide entry surface 43 of the light guide member 4 through the air region 6. When the light is transmitted to enter the light guide member 4 through the first light entry portion 431 and the second light entry portion 432, by virtue of the light-guiding effect of the light guide member 4, the first light guide surface 41 and the second light guide surface 42 reflect the light to the light guide exit surface 44 in a manner of substantial total internal reflection.

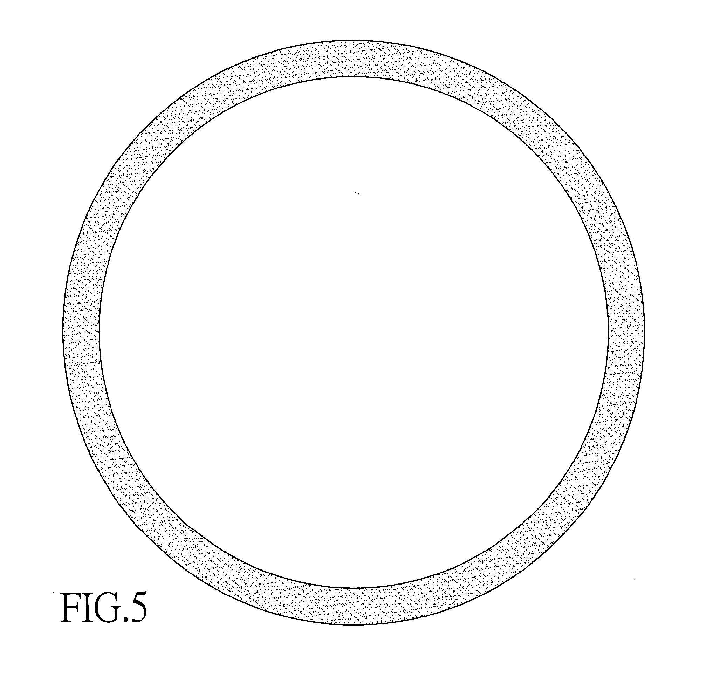

Further referring to Figure 5, when the light emitting members 21 emit the light, the light guide exit surfaces 44 of the light guide members 4 generate an annular light pattern conforming to the circumferential direction of the annular member 7.

To sum up, the illuminating efficiency of each of the light emitting members 21 is enhanced by means of light-collecting effect of the corresponding one of the light-collecting members 5. By virtue of the appropriate structural design of the light guide member 4 and the light-collecting member 5, the light guide member 4 is able to cooperate with the light-collecting member 5 so as to make the light collected by the light-collecting member 5 enter the light guide member 4 through the light guide entry surface 43. Since the first light guide surfaces 41 and the second light guide surfaces 42 reflect the light incident thereon, the light is guided to exit the light guide member 4 through the light guide exit surface 44. In such a manner, the light guide unit 3 can assist in converting a point light source as is each light emitting element 21 into an area light source and producing a light pattern that has a profile corresponding to that of the light guide exit surface 44. When the light guide units 3 are arranged in the annular manner, an overall annular light pattern is thus produced. Furthermore, to satisfy the diverse needs of various illumination devices and vehicular lamps, the light guide units 3 can be arranged differently to distribute an auxiliary light pattern around a main light (not shown) to emphasize the contour of the illumination device/vehicle lamp. In such a way, the light guide units 3 are suited for installation in a limited space of an illumination device/vehicular lamp and each of the light guide units 3 contributes to the generation of the light pattern to emphasize the profile of the illumination device/vehicular lamp.

## Claims

1. A light guide apparatus **characterized by**:
a light guide unit (3) including
a light guide member (4) having
a light guide exit surface (44),
a light guide entry surface (43) that is opposite to said light guide exit surface (44),
two opposite first light guide surfaces (41) that are connected between said light guide exit surface (44) and said light guide entry surface (43), and
two opposite second light guide surfaces (42) each of which is connected between said light guide exit surface (44) and said light guide entry surface (43) and between said first light guide surfaces (41), said second light guide surfaces (42) being transverse to said first light guide surfaces (41); and
a light-collecting member (5) disposed in proximity to said light guide entry surface (43) and having
a light-exiting surface (52) that faces said light guide entry surface (43), and
a light-entering surface (51) that is opposite to said light-exiting surface (52);
wherein light is able to pass through said light-entering surface (51), said light-exiting surface (52) and said light guide entry surface (43) to enter said light guide member (4), and said first light guide surfaces (41) and said second light guide surfaces (42) are able to reflect the light toward said light guide exit surface (44) to make the light exit and travel away from said light guide member (4).

2. The light guide apparatus as claimed in Claim 1, **characterized in that** said light-exiting surface (52) has a plurality of microstructures (521) for diffusing light.

3. The light guide apparatus as claimed in Claims 1 or 2, **characterized in that** said light guide exit surface (44) is a roughened surface.

4. The light guide apparatus as claimed in any one of Claims 1, 2 and 3, **characterized in that** said light guide entry surface (43) is indented into said light guide member (4) and toward said light guide exit surface (44) and confines a mounting space (430), said light-collecting member (5) being disposed in said mounting space (430).

5. The light guide apparatus as claimed in Claim 4, **characterized in that** said light guide entry surface (43) has a first light entry portion (431) that faces toward said light-exiting surface (52) of said light-collecting member (5), and a second light entry
portion (432) that surrounds said light-collecting member (5) and that is connected to a periphery of said first light entry portion (431), said first light entry portion (431) and said second light entry portion (432) cooperatively defining said mounting space (430), said first light entry portion (431) being convex toward said light-exiting surface (52).

6. The light guide apparatus claimed in any one of Claims 1 to 5, **characterized by** a plurality of said light guide units (3), said light guide members (4) of said light guide units (3) being arranged in an annular manner and connected to each other to form an annular member (7), said light guide exit surfaces (44) of said light guide members (4) are connected to each other in the annular manner and cooperatively form an annular surface.

7. The light guide apparatus claimed in Claim 6, **characterized in that** said first light guide surfaces (41) of each of said light guide members (4) are curved and are opposite to each other along a circumferential direction of said annular member (7), and said second light guide surfaces (42) of each of said light guide members (4) are opposite to each other along a radial direction of said annular member (7).

8. The light guide apparatus claimed in Claim 7, **characterized in that** said first light guide surfaces (41) of each of said light guide members (4) extend toward said light guide exit surface (44) in a divergent manner.

9. The light guide apparatus claimed in Claim 8, **characterized in that** said light guide entry surface (43) of each of said light guide members (4) is indented toward said light guide exit surface (44) of said light guide member (4) and confines a mounting space (430), said light-collecting members (5) of said light guide units (3) being respectively disposed in said mounting spaces (430) of said light guide members (4).
